# EUROPEAN PATENT APPLICATION

(11) **EP 4 721 631 A1**
(43) Date of publication of application: **08.04.2026**
(21) Application number: 24810518.1
(22) Date of filing: 22.05.2024
(51) Int. Cl.: A47J 43/18, A22C 17/02

(54) **HAM DISPLAY CASE**

(30) Priority: 24.05.2023 ES 202330897 U; 29.04.2024 ES 202430796 U
(71) Applicant: Fernandez Lanuza, Francisco José, 03530 La Nucia (Alicante) (ES); Díaz Gómez, Robert, 03530 La Nucia (Alicante) (ES)
(72) Inventor: Fernandez Lanuza, Francisco José, 03530 La Nucia (Alicante) (ES); Díaz Gómez, Robert, 03530 La Nucia (Alicante) (ES)
(74) Representative: Temiño Ceniceros, Ignacio
(86) International application number: PCT/ES2024/070308
(87) International publication number: WO 2024/240981

(57) **Abstract**

The invention relates to a ham display case comprising: a bottom base (2) with a movable ham support (3); a transparent dome (4); a digital temperature control device (5) for controlling the internal temperature; a tray (6); a storage drawer (7); and a plate warmer surface (8). The invention further comprises: a tube (11) that expels air towards a specific portion of the ham (J); a motorised mechanism (12) that drives a shaft (13) of the ham support (3) connected to one or two operating buttons (14); a weighing cell (15) that acts as a scale; and a humidifier device (100) for controlling the relative humidity of the internal air with the dome (4) closed and for increasing or decreasing said humidity.

## Description

### OBJECT OF THE INVENTION

The invention, as stated in the title of the present specification, relates to a ham display case which contributes advantages and features to its intended use that which are described in detail further on, which entail an improvement in the current prior art.

More specifically, the invention relates to a display case or cabinet which, being of the type consisting of a refrigerated unit suitable for housing at least one piece of ham to be consumed by cutting, either a leg or shoulder, comprising elements such as digital temperature control means for controlling the temperature, an optionally removable tray incorporating the ham support, a storage drawer for knives and a thermal plate warmer surface to ensure the correct preservation of the piece while it is not being consumed and to facilitate cutting operations, all covered with a transparent closing dome with or without interior lighting that allows the piece to be viewed from the outside, having a series of improvements that, inter alia, consist essentially of including a tube with which air can be applied directly to the cutting area, a mechanism for automatically moving the ham in the ham support thereof, a weighing cell to know the weight of the ham being cut and a humidifier device that controls the relative humidity of the air inside the display case in order to humidify or dehumidify it, preferably also including systems for disinfection and anti-bacterial control.

### FIELD OF APPLICATION OF THE INVENTION

The field of application of the present invention falls within the sector of the industry dedicated to the manufacture of refrigerated apparatus for food, focusing particularly on the field of display cases, cabinets, chests, and similar units intended for the preservation of ham and similar products.

### BACKGROUND OF THE INVENTION

Many types and models of apparatus in the form of display cases or cabinets for preserving food of all kinds, including hams for cutting, are known in the prior art. However, in most cases it only relates to units for preserving the pieces in sales or distribution establishments for preservation prior to opening them for consumption.

Furthermore, all kinds of ham supports are widely known, which make it easier to hold the piece of ham, whether a shoulder or leg, while it is being cut and consumed. In addition, to keep the pieces that have started to be cut, some types of cabinet or display case are also known, inside which the piece fits with its ham support.

However, said cabinets or display cases usually consist of a container sized to hold the ham with its support and, at most, have a refrigeration system to maintain temperature control.

Furthermore, it is well known that, in order to correctly preserve and cut ham pieces into slices by hand, several aspects must be taken into account. Among them, in addition to securely holding the piece of ham by means of a suitable ham support, it is primarily necessary to be able to position the support and the piece itself in the suitable position, as appropriate at each stage of cutting, in order to cut the slices in the correct cutting direction. In addition, the various knives and utensils needed to perform the different processes for preparing and cutting the ham must also be within reach. A suitable space must also be provided to preserve the layers of white fat that are used to cover the cut areas. Lastly, it is very important to be able to keep the piece at a suitable temperature of between 20°C and 25°C.

The problem is that existing cabinets or display cases only provide a storage container, which usually means that the piece must be taken out of the container with the support each time it is to be consumed.

In order to overcome this shortcoming, document ES1298363U, the holder of which is the applicant of the present invention, discloses a ham cabinet that provides the necessary conditions to facilitate the cutting of ham pieces in any position without the need to make any effort to remove them from the cabinet and maintaining a constant temperature control.

However, although said ham cabinet satisfactorily fulfils the objectives for which it was designed, there are still certain aspects that could be improved. In particular, for example, it would be desirable to have a ham display case or cabinet equipped with means to facilitate the cutting operation.

As is well known, when cutting ham, the knife may sometimes adhere or stick to the meat. This is due to a phenomenon called cohesive adhesion or capillary adhesion. Ham contains a significant amount of intramuscular fat and proteins that form a network of fibres and structures in its tissue. When the ham is cut with a sharp knife, the pressure exerted on the meat breaks these structures and releases the fat and juices from the ham. However, when fat and juices are released, they can fill the small spaces and cavities between the knife blade and the cutting surface. This creates a kind of "suction" or capillary adhesion between the knife and the meat, which causes the knife to adhere momentarily.

It is important to note that the degree of adhesion may vary depending on factors such as the temperature of the ham, as well as the quality of the knife and the technique used to cut it.

Thus, if air is applied to the Serrano ham before slicing, for example, cold or warm air, the adhesion of the knife to the meat may be reduced. This is due to the fact that the cold air can help solidify the intramuscular fat in the ham, which would decrease its ability to fill the spaces between the knife blade and the cutting surface. Solidifying the fat reduces the amount of liquid and therefore the possibility of capillary adhesion is reduced.

Furthermore, it is important to remember that Serrano ham should be consumed at room temperature in order to enjoy its optimum flavour and texture. Therefore, if cold air is applied before slicing, it is desirable to do so in a moderate and controlled manner, ensuring that the ham is brought up to temperature before serving.

Therefore, the present invention aims to provide an improved ham display case or cabinet to apply air over the cutting area in a controlled manner.

Another aspect that can be improved is the problem of having to hold the ham with the hand to move and place it in the ideal position at each cutting stage, as it is consumed, as it would be desirable to have automatic means to move the ham with the ham support on which it is fixed.

Another aspect to take into account is to be able to know the weight of the ham that is being cut since, preferably, the ham display case or cabinet of the invention is intended for professional use, for example in establishments for retail sale and/or in hotel and catering establishments, where it is important to be able to monitor the volumes of the portions that are served, since it is an expensive product and it is useful to monitor the quantities that are served.

Likewise, another important aspect to take into account is related to the humidity control inside the display case, since, as is well known, the degree of air humidity plays a crucial role in the preservation and quality of a ham, both before and after cutting. Before cutting the ham, because during the curing and storage process, it is essential to control the relative humidity of the environment where the ham is located, and after starting to cut the ham because, once the ham has started to be cut, it is essential to control the humidity of the surrounding environment to prevent the exposed meat from drying out quickly. If the air is too dry, the cut area of the ham can quickly lose moisture, resulting in a less intense flavour and a less juicy texture. Furthermore, if the humidity is too high, the ham may become sticky and prone to the growth of mould or other undesirable micro-organisms.

Lastly, an additional aspect to be taken into account is that of disinfection and bacterial control, as this is an object intended for food use.

Thus, these and some others are aspects that are intended to be improved with the ham display case of the present invention, and it should be noted that, as a reference to the current prior art, at least the applicant is unaware of the existence of any other ham display case or similar invention that has technical and structural features that are the same as or similar to those of the one claimed here.

### DESCRIPTION OF THE INVENTION

The ham display case that the invention proposes is configured as an optimal solution to the above-mentioned objectives which, at the same time, represents an improvement on what is currently known, the characterising details that make it possible and that distinguish it being conveniently included in the final claims that accompany the present description.

As mentioned above, the invention proposes a display case consisting of a transparent refrigerated unit, suitable for housing at least one piece of ham to be consumed by cutting, either a leg or shoulder, comprising a series of elements which, in addition to ensuring the correct preservation of the said piece of ham while it is not being consumed, keep it in optimum temperature and humidity conditions and facilitate cutting operations each time it is to be consumed.

To this end, and more specifically, the ham display case of the invention is of the type that, as already known from the document mentioned in the previous section, essentially comprises the following elements:
- A steel base with at least one ham support incorporated thereon.
- A transparent dome that closes over said base defining an interior housing space that holds at least one piece of ham, a leg or shoulder, installed on the support.
- Means for regulating and controlling the temperature of said interior space integrated in the base and equipped with a digital control device for controlling the device, which allows at least the temperature of the interior of the display case to be easily known.
- A tray on which the ham support is integrated, preferably a mobile tray, so that the assembly can be removed from the interior of the display case, once the closing dome has been opened, to facilitate the slicing work.
- A storage drawer for knives and other utensils, which allows the different types of knives that may be needed in the different preparation and cutting phases of the ham to be kept within reach.
- And a thermal plate warmer surface, which heats a plate or dish on which to place the slices of ham when cutting at a colder ambient temperature than desirable, or for the white fat cuts that have to be used to cover the cut areas of the ham, preventing them from cooling.

Based on said already known configuration, the ham display case of the present invention is essentially distinguished due to the fact that it also comprises the following essential elements:
- A tube, preferably a flexible tube, which expels air in a controlled manner and which can be directed towards a certain part of the ham incorporated in the support, to provide air, preferably at a controlled temperature, above the cutting area in order to modify the temperature of the ham and prevent the knife from adhering to the fat while the ham is being cut.
- A motorised mechanism that drives a shaft linked to the mobile ham support, preferably with a tilting and rotary movement, due to which the ham can be placed in a horizontal and vertical position and can be rotated by up to 360° to cut it in the ideal position at any given moment, which is operated by means of a button.
- A weighing cell or load cell linked to a digital display that acts as a scale to weigh the grams of the ham cuts that are being made. Optionally, this cell can be integrated into the plate warmer surface.
- And a humidifier device that controls the relative humidity of the air inside the display case and increase and decrease the humidity of the air as required.

The ham display case thereby keeps the ham pieces in an optimum temperature and humidity state and, in addition, greatly facilitates cutting operations, especially when these are performed by professionals who require high precision and quality in a product as prized as ham.

Preferably, the tube for applying air to the cutting area, or to any other area of the ham that is of interest, is a flexible tube which, optionally, is connected in an easily removable way, for example by pressure, to a frame provided for this purpose in line with the fan integrated in the means for regulating and controlling the temperature of the interior space of the display case, in such a way that the outlet of air can be adjusted to the desired temperature and be cold, warm or hot air, as appropriate depending on the conditions of the ham.

Thus, the tube is removable, to be incorporated only if it is convenient, depending on the ambient temperature in the establishment and at the time the ham is cut, as this can vary by many degrees from one place to another or from one time of the year to another.

Optionally, the ham display case can be fitted with a securing support or hook to place and hold the distal end of the tube in a raised position, near the upper area, which is normally where the cutting area is located.

In any case, in an exemplary embodiment, the ham display case also comprises, as a digital control device for controlling the temperature, a digital clock that displays both the temperature inside the ham display case and the temperature outside it.

It is important to point out that, in other exemplary embodiments, the base and the dome that closes the base are sized to accommodate more than one ham, for example two or three, in which case the means for regulating and controlling the temperature are equipped with a programmable electronic system to adapt said temperature to the number of hams incorporated inside the display case, as the temperature variation needs with respect to the outside are not be the same if there is space inside the display case for three hams but there is only one, or if there are three hams incorporated therein.

Likewise, in another exemplary embodiment of the ham display case, the means for regulating and controlling the temperature include a thermostat equipped with a manually operated remote for a user to be able to manually regulate the temperature at will and to be able to adjust the temperature inside the display case to values different from those initially foreseen for whatever reason, for example if the ham has been in a cold place and its tempering is to be accelerated or vice versa.

In any case, in a preferred embodiment, the thermal plate warmer surface is equipped with integrated heating elements consisting of high-resistance fabric filaments, which generate heat when connected to an electricity source. The heat emitted by said fabric filaments thereby helps keep the ham that is placed on a plate or dish placed on said plate warmer surface at a suitable temperature with minimum energy consumption.

In addition, the heating means integrated in the thermal plate warmer surface are preferably activated by a separate switch.

Furthermore, both the thermal plate warmer surface and the operating switch thereof can be installed on either the right or left side of the ham display case, to facilitate its use by both left-handed and right-handed people, since, as is well known, the position of the ham and the grip on the knife change depending on which hand is used to perform the operation.

It is also important to note that, among the utensils incorporated in the storage drawer integrated in the base of the ham display case, at least one knife sharpener is included, in addition to knives for peeling the rind, trimming the fat and cutting.

It should also be noted that, although the ham display case is preferably fitted with a plug for connection to the mains for the electrical power supply of the drives and electrical devices it comprises, in an exemplary embodiment thereof, the inclusion of a battery is envisaged to allow it to operate autonomously in any location, for example to be able to store the hams in the case of outdoor catering or to transport them for ham cutters or for any relocation.

Furthermore, the humidifier device of the ham display case of the invention essentially comprises the following elements:
- A small water tank, which is used to create mist or steam to humidify the inside of the display case and consequently the piece of ham if necessary.
- A misting or evaporation mechanism, responsible for converting the water stored in the tank into steam or fine mist and dispersing it into the air inside the display case.
- A humidity sensor that periodically or constantly monitors humidity levels inside the display case, allowing the humidifier to automatically adjust its operation to maintain relative humidity within a programmed range.
- A humidity regulator, which may be analogue, such as a dial or knob, or which may be digital, such as an electronic control panel, to adjust the desired humidity levels.
- And an electrical energy source, through connection to the mains or batteries, preferably by means of the same source that powers the rest of the components, mechanisms and electrical and electronic devices of the ham display case.

In addition, said humidifier device also preferably comprises a water filter to remove impurities and minerals from the water before it turns into steam, especially if the water to be used is hard or contains high levels of minerals.

Preferably, the humidifier device also comprises a small fan to help disperse the water vapour more effectively throughout the interior of the display case.

In any case, the ham display case of the invention also comprises one or more systems for the disinfection and/or anti-bacterial control of the water used in the humidifier device, in order to guarantee the total food safety of the device.

Thus, in one embodiment, the water in the tank of the humidifier device may be treated by means of a disinfection apparatus, for example, an ultraviolet ray apparatus integrated in the ham display case for this purpose, specifically a UVC lamp or UVC emitting device arranged to irradiate the contents of said tank, so that the exposed micro-organisms are damaged and their ability to replicate and infect is hindered.

Optionally or alternatively, the water in the tank of the humidifier device may be treated by means of an anti-bacterial control device, for example, an ozone generating device.

It should also be noted that, although the humidifying device and, where appropriate, the apparatus or apparatuses for disinfection and/or anti-bacterial control are preferably integrated into the structure of the display case, using the same power source as the rest of the electrical and electronic components thereof, the possibility that these elements consist of an independent accessory optionally incorporated into an existing display case cannot be ruled out, in which case, the humidity regulator allowing a user to control the humidity may be integrated into the device itself or connected via an external panel.

Lastly, although the ham display case of the invention is primarily intended to contain at least one ham, it can also be used to store other foods, for example cured sausages, next to said ham or even when the ham has already been consumed, since it also serves to ensure the optimum temperature and humidity control conditions for this type of food and also to facilitate the cutting and weighing of portions.

With regards to the transparent dome, in addition to being made of tempered glass or polycarbonate, it is worth noting that, in other exemplary embodiments, it can also be made of methacrylate or other materials.

### DESCRIPTION OF THE DRAWINGS

To complete the description, and for the purpose of helping to make the features of the invention more readily understandable, this description is accompanied by a set of drawings constituting an integral part of the same, which by way of illustration and not limitation represents the following:
Figure 1 shows a perspective view of an example of the ham display case of the invention, shown without the air tube and with the dome in a closed position, showing its general external configuration and other main parts.
Figure 2 shows a perspective view of another example of the ham display case according to the invention, in this case represented with the dome open and including, among other elements, the air tube in a position of use to prevent the cutting knife from sticking to the fat of the ham.
Figure 3 shows a diagram of the schematic representation of the humidifier device comprising the ham display case according to the invention, showing the main parts and elements of said device.

### PREFERRED EMBODIMENT OF THE INVENTION

In light of the aforementioned figures, and in accordance with the adopted numbering, a non-limiting exemplary embodiment of the ham display case of the invention may be observed herein, comprising that which is described in detail below.

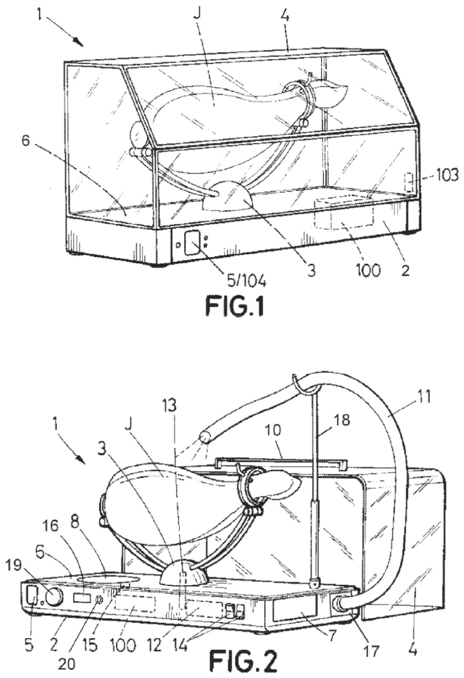

Thus, as can be seen in Figures 1 and 2, the ham display case (1) of the invention comprises, in the known manner:
- a lower base (2) with at least one movable ham support (3) incorporated thereon;
- a transparent dome (4) that, optionally fitted with a handle (10), closes over said base (2) defining an interior housing space that accommodates at least one piece of ham (J) installed in the ham support (3);
- means for regulating and controlling the temperature of said interior space, with a digital temperature control device (5) integrated, for example, externally in the base (2), which allows the temperature of the interior space to be displayed;
- a tray (6), which may or may not be removable, on which the ham support (3) is integrated;
- a storage drawer (7) for knives and other utensils, for example, a knife sharpener; and
- a thermal plate warmer surface (8).

Moreover, the aforementioned ham display case (1) of the invention is distinguished by the fact that, in addition, it also comprises:
- a tube (11), preferably a flexible tube, which expels air to direct it towards a certain part of the ham (J) incorporated in the ham support (3), such as the cutting area, and prevents the knife from adhering to the fat when the ham is cut;
- a motorised mechanism (12) that drives a shaft (13) linked to the mobile ham support (3), in order to place the ham (J) in a horizontal or vertical position and/or rotate it by up to 360° to cut it in the ideal position at any given moment, said mechanism being connected to one or two operating buttons (14);
- a weighing cell (15) or load cell, preferably connected to a digital display (16), which acts as a scale to weigh the contents of the ham being cut; and
- a humidifier device (100) to control the relative humidity of the air inside the ham display case (1) when the dome (4) is in the closed position and increase or decrease said humidity, that is, humidify or dehumidify.

Preferably, the tube (11) expels air at a temperature that can be adjusted to be cold, warm or hot air as required. For this purpose, the tube (11) is preferably removably connected, for example, by pressure, to a coupling frame (17) provided in the air outlet grille of the means for regulating and controlling temperature, in which at least a fan is provided.

Optionally, a securing support (18) is provided to hold the tube (11) in a raised position. In an exemplary embodiment, said support (18) comprises a rod that can be deployed or extended between a retracted position and a vertical position with a hook at the end for positioning the tube. Figure 2 shows both the tube (11) and the securing support (18).

In any case, the digital temperature control device (5) is a digital clock configured to be able to show both the temperature inside the ham display case (1) and the temperature outside the same.

Optionally, the base (2) and the transparent dome (4) are sized to accommodate more than one ham (J) in their respective ham support (3), and the means for regulating and controlling the temperature are configured to adapt the temperature of the interior space to the number of hams incorporated inside the display case or cabinet.

Optionally, the means for regulating and controlling the temperature include a manually operated thermostat (19) to be able to manually regulate the temperature at will.

Optionally, the weighing cell (15) or load cell is linked to the plate warmer surface (8) so that the contents of the plate or container incorporated thereon can be weighed.

In any case, in one embodiment, said thermal plate warmer surface (8) is equipped with integrated heating elements consisting of fabric filaments (not shown in figure 1) that are connected to the power source of the ham display case (1). Preferably, said heating means of the plate warmer surface (8) are activated via a switch (20).

It must be noted that, although the plate warmer surface (8) and the operating switch (20) to operate the same are installed on the left side with respect to the ham support (3) in the example in Figure 1, they may be installed on the right side to facilitate the use of the ham display case (1) for both right-handed and left-handed people.

Furthermore, although not shown, the ham display case (1) is preferably equipped with a cable and plug for connection to the mains for electrical power supply and optionally comprises a battery to allow it to operate autonomously.

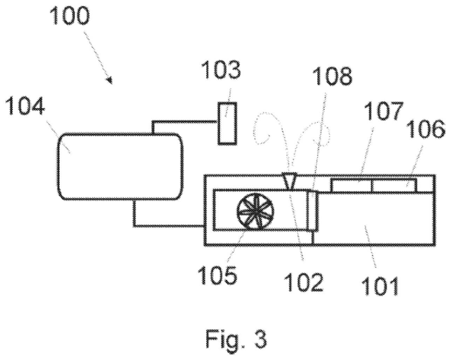

Figure 3 shows how the humidifier device (100) of the ham display case (1) preferably comprises at least the following elements:
- a water tank (101) arranged so that it can be easily refilled;
- a misting mechanism (102), linked to the tank (101) to transform the stored water into steam or fine mist and expel it inside the display case (1) when humidity levels are below a pre-set range;
- a humidity sensor (103) that periodically or constantly monitors the humidity levels inside the display case (1) to activate or not the misting mechanism (102);
- a humidity regulator (104), which is analogue or digital, such as a dial or knob, or an electronic control panel, optionally linked to the same digital temperature control device (5) integrated in the base (2) of the display case (1); and
- an electrical power source (not shown), preferably consisting of the same mains connection or batteries that power the rest of the electrical and electronic components of the display case (1).

The humidifier device (100) preferably further comprises a water filter (108) arranged between the tank (101) and the misting mechanism (102) or evaporator to remove impurities and minerals from the water.
Preferably, the humidifier device (100) further comprises a fan (105) that helps to disperse the water vapour generated by the misting mechanism (102).

In any case, in a preferred embodiment, the humidifier device (100) further comprises one or more systems for the disinfection and/or anti-bacterial control of the water used therein.

Thus, the humidifier device (100) preferably comprises an ultraviolet ray apparatus (106) consisting of a UVC lamp or UVC emitting device that irradiates the water content of the tank (101) as a system for the disinfection thereof.

Moreover, the humidifier device (100) optionally or alternatively comprises an ozone generating apparatus (107) as a system for the anti-bacterial control of the water in the tank (101).

Furthermore, the humidifier device (100) is preferably factory-integrated into the structure of the display case (1), preferably in such a way that at least the tank (101) and the misting mechanism (102) and, where appropriate, the filter (104), the fan (105), the UV apparatus (106) and the ozone generator (107), are embedded inside the base (2), while the humidity sensor (103) and the regulator (104) are external thereto.

However, in an alternative embodiment option, the humidifier device (100) is an independent accessory that can be incorporated into the display case (1), which consists of an existing ham display case.

Having sufficiently described the nature of the present invention, as well as the way of implementing it, it is not considered necessary to extend its explanation for any expert in the state of the art to understand its scope and the advantages which derive from it, specifying that, within its essential nature, it can be carried out in other embodiments that differ in detail from the one provided by way of example, and which are also covered by the requested protection, provided that they do not alter, change or modify its fundamental principle.

## Claims

1. A HAM DISPLAY CASE that, comprising: a lower base (2) with at least one movable ham support (3) incorporated thereon; a transparent dome (4) that closes over said base (2) defining an interior housing space that accommodates at least one piece of ham (J) installed in the ham support (3); means for regulating and controlling the temperature of said interior space, with an integrated digital temperature control device (5), which allows the temperature of the interior space to be displayed; a tray (6) on which the ham support (3) is integrated; a storage drawer (7) for knives and other utensils such as a knife sharpener; and a thermal plate warmer surface (8), is **characterised in that** it further comprises:
- a tube (11) which expels air to direct it towards a certain part of the ham (J) incorporated in the ham support (3), such as the cutting area to prevent the knife from adhering to the fat when the ham is cut;
- a motorised mechanism (12) that drives a shaft (13) linked to the mobile ham support (3), in order to place the ham (J) in a horizontal or vertical position and/or rotate it by up to 360° to cut it in the ideal position at any given moment, said mechanism being connected to one or two operating buttons (14);
- a weighing cell (15) or load cell that acts as a scale; and
- a humidifier device (100) to control the relative humidity of the air inside the ham display case (1) when the dome (4) is in the closed position and increase or decrease said humidity.

2. The HAM DISPLAY CASE, according to claim 1, **characterised in that** the tube (11) that expels air is a flexible tube.

3. The HAM DISPLAY CASE, according to claim 1 or 2, **characterised in that** the tube (11) expels air at a temperature that can be adjusted to be cold, warm or hot air as required.

4. The HAM DISPLAY CASE, according to claim 3, **characterised in that** the tube (11) is removably connected to a coupling frame (17) provided in the air outlet grille of the means for regulating and controlling temperature, in which at least a fan is provided.

5. The HAM DISPLAY CASE, according to any of the preceding claims, **characterised in that** it comprises a securing support (18) to hold the tube (11) in a raised position.

6. The HAM DISPLAY CASE, according to any of the preceding claims, **characterised in that** the digital temperature control device (5) is a digital clock configured to show both the temperature inside the display case (1) and the temperature outside the same.

7. The HAM DISPLAY CASE, according to any of the preceding claims, **characterised in that** the base (2) and the transparent dome (4) are sized to accommodate more than one ham (J) in their respective ham support (3); and **in that** the means for regulating and controlling the temperature are configured to adapt the temperature of the interior space to the number of hams incorporated inside the display case or cabinet.

8. The HAM DISPLAY CASE, according to any of the preceding claims, **characterised in that** the means for regulating and controlling the temperature include a manually operated thermostat (19) to manually regulate the temperature at will.

9. The HAM DISPLAY CASE, according to any of the preceding claims, **characterised in that** the thermal plate warmer surface (8) is equipped with integrated heating elements consisting of fabric filaments that are connected to the power source of the ham display case or cabinet (1).

10. The HAM DISPLAY CASE, according to any of the preceding claims, **characterised in that** the humidifier device (100) comprises at least:
- a water tank (101) arranged so that it can be easily refilled;
- a misting mechanism (102), linked to the tank (101) to transform the stored water into steam or fine mist and expel it inside the display case (1) when humidity levels are below a pre-set range;
- a humidity sensor (103) that monitors the humidity levels inside the display case (1) to activate or not the misting mechanism (102);
- a humidity regulator (104); and
- an electrical power source.

11. The HAM DISPLAY CASE according to claim 10, **characterised in that** the humidifier device (100) comprises a water filter (108) arranged between the tank (101) and the misting mechanism (102) to remove impurities and minerals from the water.

12. The HAM DISPLAY CASE, according to claim 10 or 11, **characterised in that** the humidifier device (100) comprises a fan (105) that helps to disperse the water vapour generated by the misting mechanism (102).

13. The HAM DISPLAY CASE according to any one of claims 10 to 12, **characterised in that** the humidity regulator (104) is analogue and consists of a dial or knob.

14. The HAM DISPLAY CASE, according to any one of claims 10 to 12, **characterised in that** the humidity regulator (104) is digital and is linked to the digital temperature control device (5) integrated in the base (2).

15. The HAM DISPLAY CASE, according to any of claims 10 to 14, **characterised in that** the power source of the humidifier device (100) is the same mains connection or batteries that power the rest of the electrical and electronic components of the ham display case (1).

16. The HAM DISPLAY CASE, according to any one of claims 10 to 15, **characterised in that** the humidifier device (100) also comprises one or more systems for the disinfection and/or anti-bacterial control of the water used therein.

17. The HAM DISPLAY CASE according to claim 16, **characterised in that** the humidifier device (100) comprises an ultraviolet ray apparatus (106) comprising a UVC lamp or UVC ray emitting device.

18. The HAM DISPLAY CASE according to claim 16 or 17, **characterised in that** the humidifier device (100) comprises an ozone generating apparatus (107).

19. The HAM DISPLAY CASE, according to any of the preceding claims, **characterised in that** the humidifier device (100) is factory-integrated into the structure of the ham display case (1).

20. The HAM DISPLAY CASE, according to any of claims 1 to 18, **characterised in that** the humidifier device (100) is an independent accessory that can be incorporated into the ham display case (1).
